Europäisches Patentamt

European Patent Office

Office européen des brevets

(19)

(11) Veröffentlichungsnummer: **0 124 703 B2**

# (12) NEUE EUROPÄISCHE PATENTSCHRIFT

(45) Veröffentlichungstag der neuen Patentschrift:
**19.06.91 Patentblatt 91/25**

(51) Int. Cl.⁵: **G02B 6/38**

(21) Anmeldenummer: **84102298.1**

(22) Anmeldetag: **03.03.84**

(54) **Steckverbinder für Lichtwellenleiter.**

(30) Priorität: **11.03.83 DE 3308679**

(43) Veröffentlichungstag der Anmeldung:
**14.11.84 Patentblatt 84/46**

(45) Bekanntmachung des Hinweises auf die
Patenterteilung:
**21.01.87 Patentblatt 87/04**

(45) Bekanntmachung des Hinweises auf die
Entscheidung über den Einspruch:
**19.06.91 Patentblatt 91/25**

(84) Benannte Vertragsstaaten:
**CH DE FR GB IT LI SE**

(56) Entgegenhaltungen:
**EP-A- 0 036 814**
**EP-A- 0 039 954**
**DE-A- 2 548 996**
**DE-A- 2 628 747**

(56) Entgegenhaltungen:
**DE-A- 2 649 347**
**DE-A- 2 754 347**
**DE-A- 2 837 016**
**FR-A- 2 391 481**
**GB-A- 1 558 914**
**US-A- 3 999 837**
**US-A- 4 140 366**

(73) Patentinhaber: **INOVAN GmbH & Co. KG**
**Metalle und Bauelemente**
**Industriestrasse 44**
**7534 Birkenfeld-Pforzheim (DE)**

(72) Erfinder: **Sauter, Erwin A., Dr.**
**Bauschlotter Strasse 2**
**W-7531 Neulingen-Göbrichen (DE)**
Erfinder: **Paust, Peter**
**Langenbrander Strasse 4**
**W-7543 Engelsbrand 3 (DE)**

(74) Vertreter: **Trappenberg, Hans**
**Postfach 1909**
**W-7500 Karlsruhe 1 (DE)**

EP 0 124 703 B2

**Beschreibung**

Die Erfindung betrifft einen Steckverbinder für Lichtwellenleiter (LWL), bestehend aus einem Steckergehäuse, in das die LWL von gegenüberliegenden Stirnseiten über Haltemittel (Quetschhülse (Crimphülse), Konusverschraubung, Klebehülse etc.), in denen sie festgelegt sind, lösbar einzufügen sind sowie aus einer im Gehäuse geführten Zentriereinheit, die die mit Zentrierstücken belegten oder freien Faserenden erfaßt und in geringstmöglichem Abstand zueinander festlegt, wobei die Zentriereinheit eine doppelkonische Blattfederhülse ist, welche aus einem gerollten, an den zusammenstoßenden Enden zusammengefügten, leiterartig ausgestanzten Band gebildet ist.

Steckverbinder für Lichtwellenleiter dienen einmal zum Verbinden zweier Lichtwellenleiter, wie auch zum Verbinden eines Lichtwellenleiters mit einem Wandler. Ein derartiger optischer Steckverbinder stellt also ein unerläßliches Glied in einem optischen Übertragungssystem dar, an das besondere Anforderungen gestellt sind. An erster Stelle ist hier neben der sicheren Verbindung die geringe Dämpfung zu nennen, die von vielerlei Faktoren abhängig ist. Diese möglichst geringe Dämpfung muß zudem noch über möglichst viele Verbindungszyklen gleichbleibend beibehalten werden, wobei 100 Steckzyklen als das Minimum gelten dürfen.

Die Dämpfung an der Verbindungsstelle zweier Fasern ist abhängig von
a) dem Faserversatz,
b) dem Faserstirnflächenabstand,
c) dem Winkelfehler.

Unter Faserversatz versteht man den Abstand der parallel verlaufenden Achsen der zusammenstoßenden Faserenden. Der Winkelfehler gibt den Winkel an, in dem diese Achsen aufeinander stoßen.

Um den Faserversatz und den Winkelfehler bei derartigen Steckverbindungen möglichst klein zu halten, sind verschiedene Ausführungen von Steckverbindern bekannt geworden. Bei dem am weitesten verbreiteten Steckverbinder wird die Glasfaser in einem Uhrenstein geführt, der seinerseits in einem Steckergehäuse angeordnet ist. Statt des Uhrensteins, in dessen zentrische Öffnung die Glasfaser einzuführen ist, sind auch Zentriereinheiten bekannt geworden, die die Glasfaser in Zentrierelementen führen. Zentrierelemente sind beispielsweise verhältnismäßig dicke Faserstäbe, die außenseitig von einer Hülse umfaßt werden und im Zentrum des gemeinsamen Umkreises die Glasfaser führen oder auch Nuten, an deren schräg verlaufenden Wandungen sich die zu verbindenden Glasfasern anlegen. Eine Verbesserung dieser Steckverbinder stellt die Ausführung nach der GB 1.558.914 dar, bei der eine Zentriereinheit für eine, die Glasfasern aufnehmende Hülse vorgesehen ist, die aus mindestens drei nach innen vorgebogenen Blattfedern besteht. Es ist also, im Gegensatz zu den allgemein verwendeten Zentriermitteln, nicht eine starre Zentraleinheit vorgesehen, die gegebenenfalls nur axial und seitlich präzise geführt, verschiebbar angeordnet ist, sondern ein zu einer Blattfederhülse zusammengefaßtes federelastisches Element, das die die Fasern aufnehmende Hülse einwandfrei zentral erfaßt. Statt daß die Blattfedern auf die Hülse drücken und die Hülse zentrieren können diese Blattfedern auch so ausgebildet sein, daß sie direkt auf der Glasfaser aufliegen, womit eine weitere mögliche Federquelle eliminiert ist.

Eine ähnliche Vorrichtung zeigt die DE-OS 649 347, bei der die Blattfedern zu einer Blattfederhülse zusammengefaßt sind, die aus einem gerollten, an den zusammenstoßenden Enden zusammengefügten, leiterartig ausgestanzten Band gebildet ist.

Es ist verständlich, daß diese Verbinder sehr präzise hergestellt werden müssen und daß sie daher, auch unter Berücksichtigung der verhältnismäßig wertvollen Materialien, sehr teuer sind.

Aufgabe der Erfindung ist es, einen derartigen Steckverbinder anzugeben, der weitestgehend die Verursachungen der hohen Dämpfung, also den Faserversatz, den Faserstirnflächenabstand und den Winkelfehler ausschalten und der doch, ohne feinmechanische Präzisionsarbeit, unter Verwendung gängiger Materialien preiswert hergestellt und einfach montiert werden kann.

Die gestellte Aufgabe wird in erfindungsgemäßer Weise dadurch gelöst, daß sich die Blattfederhülse mit beiden Stirnflächen an den Haltemitteln abstützt und daß beim axialen Zusammendrücken der Blattfederhülse die einzelnen Blattfedern auf die Außenflächen der beiden freien oder mit Zentrierstücken belegten Lichtwellenleiter (LW) gepreßt werden, so daß die beiden LWL miteinander fluchten. Die Aussparungen können etwa ein Parallelogramm mit abgeflachten Eckpunkten oder eine Ellipse bilden. Eine sehr einfache Ausführung ist dadurch gegeben, daß die Aussparungen durch in "Holm"-Richtung verlaufende Endschlitze begrenzte Trennschlitze sind und daß die vorgestanzten Blattfedern aus der Bandebene herausgeschränkt sind. Beim Zusammendrücken einer derart gebildeten Blattfederhülse legen sich die jeweiligen Endflächen der Blattfeder an die Außenseite der Glasfaser und justieren sie ebenfalls in der beschriebenen Art und Weise.

Um eine Korrosion der Blattfedern beziehungsweise der Blattfederhülse zu vermeiden, wird deren Oberfläche zweckmäßigerweise mit einem Antikorrosionsbelag beschichtet, beispielsweise vergoldet.

Insgesamt ergibt sich, unter Verwendung der erfindungsgemäßen Zentriereinheit, ein Steckverbinder, der sowohl die möglichen Montagfehler – Faserversatz, Faserstirnflächenabstand, Winkelfehler – eliminiert, wie auch preiswert herzustellen und einfach zu montieren ist.

Auf der Zeichnung sind Ausführungsbeispiele des Erfindungsgegenstandes schematisch dargestellt, und zwar zeigen :

Fig. 1, Fig. 2 und Fig. 3 verschiedene Steckverbinderausführungen mit Blattfederhülsen,

Fig. 4 ein ausgestanztes Band zum Herstellen einer Blattfederhülse,

Fig. 5 das zusammengerollte und zusammengefügte Band nach Fig. 4,

Fig. 6 die damit hergestellte Blattfederhülse im zusammengedrückten Zustand,

Fig. 7 ein ausgestanztes Band zum Herstellen einer weiteren Blattfederhülse,

Fig. 8 eine Seitenansicht zu Fig. 7 und,

Fig. 9 die Funktionsweise einer aus dem Band nach Fig. 7 hergestellten Blattfederhülse.

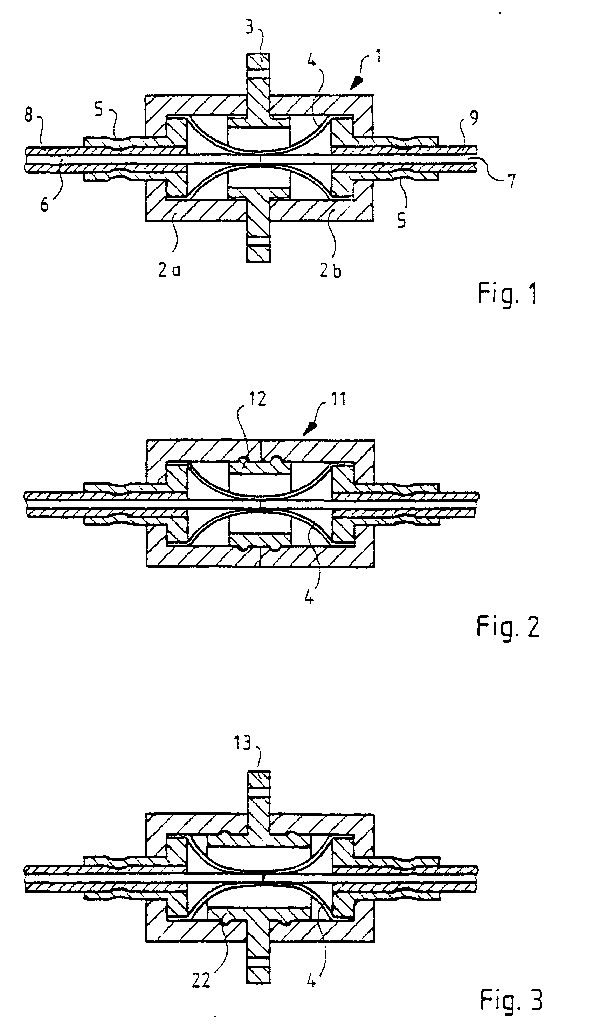

Der Steckverbinder 1 (Fig. 1) besteht aus einem zylindrischen zweigeteilten Gehäuse 2a, 2b, das über einen Schraubflansch 3 zusammengehalten ist. Im Gehäuse angeordnet ist eine Blattfederhülse 4, die sich beidseitig auf über Flansche in das Gehäuse 2a, 2b eingefügten Crimphülsen 5 abstützt. In diesen Crimphülsen 5 (Haltemitteln) sind die Glasfasern 6, 7 mit ihren Mänteln 8, 9 mittels eines Crimpwerkzeuges axial festgelegt. Die freigelegte faser 6, 7 ragt über diese Crimpnülsen 5 hinaus und ist in die Blattfederhülse 4 eingeführt, so daß die beiden Faserstirnflächen aneinander stoßen. Durch das Aufpressen der einzelnen Blattfedern 10 auf die Außenflächen der beiden Glasfasern 6, 7 werden diese Glasfaserenden nicht nur sicher in der Blattfederhülse 4 gehalten, sondern auch so justiert, daß deren Achsen miteinander fluchten. Dies auch dann, wenn die Durchmesser der beiden Glasfaserenden geringfügig unterschiedlich sind oder auch der Außendurchmesser der Glasfasern geringfügig von der Kreisform abweicht.

Die Montage des Steckverbinders nach der Erfindung beschränkt sich also im wesentlichen darauf, die beiden Glasfaserenden über eine kurze Strecke von ihrem Mantel zu befreien, sie in den Crimphülsen 5 festzulegen und sodann in des Gehäuse beziehungsweise die Blattfederhülse 4 einzuführen. Nach Verschrauben der beiden Gehäusehälften 2a, 2b sind die beiden Glasfaserenden sicher justiert und in der korrekten Lage gehalten.

Selbstverständlich entfällt das Abmanteln bei Glasfasern mit Glasmantel. Bei dieser Art LWL sind die Glasfasern lediglich in den Crimphülsen 5 im entsprechenden Abstand der Stirnfläche von der Hülsenstirnfläche festzulegen.

Fig. 2 zeigt den gleichen Steckverbinder 11 wie Fig. 1, jedoch mit einem Schnappverschluß, wobei eine federnde Innenbüchse 12 mit Noppen in entsprechende Vertiefungen beziehungsweise eine Ringnut im Gehäuseinneren einschnappen kann. Diese Ausführung hat den Vorteil, daß sie in Kombination mit elektrischen Steckern in ein- und dieselbe Steckerleiste einsetzbar ist.

Eine ähnliche Ausführung zeigt das Gehäuse 21 nach Fig. 3, wobei an der elastischen Innenhülse 22 ein Flansch 13 vorgesehen ist.

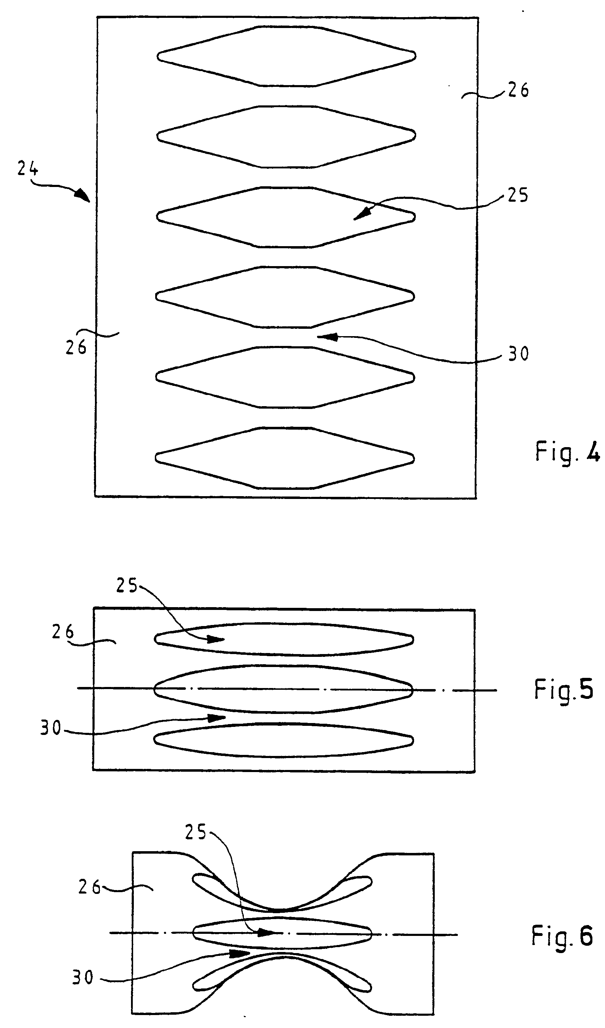

Wie ersichtlich, benötigt der dargestellte Steckverbinder keine Präzisionsteile, da die Blattfederhülse 4 die beiden Glasfaserenden eindeutig justiert und gleichzeitig fixiert. Diese Blattfederhülse 4 ist nach der Erfindung auch äußerst einfach und wirtschaftlich herstellbar, indem lediglich ein leiterartig ausgestanztes Band zu dieser Hülse zusammengerollt wird. Ausgangsmaterial hierfür ist ein Band 24 (Fig. 4), das leiterartig ausgestanzt (25) ist. Die "Holme" 26 dieses leiterartig ausgestanzten Bandes 24 können hierbei auch nach innen umgebogen werden, um so eine geschlossene Stirnseite zu bilden. Die Ausstanzungen 25 sind in diesem Beispiel parallelogrammförmig, wobei die Eckpunkte der Parallelogramme leicht abgeflacht sind. Fig. 5 zeigt das Band 24 in zusammengerolltem und an den zusammenstoßenden Enden zusammengefügtem gestrecktem Zustand ; Fig. 6 zeigt die gleiche Blattfederhülse in zusammengedrücktem Zustand. Die Blattfedern werden bei dieser Ausführung durch die verbleibenden Stege 30 zwischen den Aussparungen 25 gebildet.

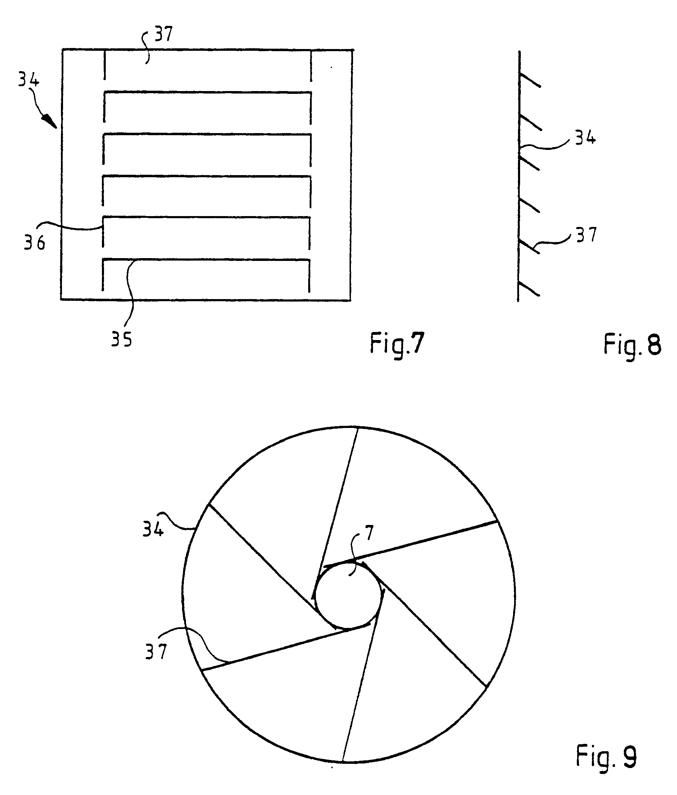

Eine Variante hierzu zeigen die Fig. 7 bis 9. Hier ist ein Band 34 wiederum leiterartig mit Aussparungen versehen, wobei diese Aussparungen jedoch Trennschlitze 35 sind, die durch senkrecht zu ihnen stehende Endschlitze 36 begrenzt sind. Hierdurch sind Blattfedern 37 vorgestanzt, die nun aus der Ebene des Bandes 34 herausgeschränkt werden, wie dies Fig. 8 zeigt. Wird dieses Band 34 auch wieder zu einer Blattfederhülse gerollt und durch Druck auf die Stirnflächen zusammengedrückt, so legen sich diese Blattfedern 37, wie dies Fig. 9 zeigt, an die Glasfaser 7 an.

## Ansprüche

1. Steckverbinder für Lichtwellenleiter (LWL), bestehend aus einem Steckergehäuse, in das die LWL von gegenüberliegenden Stirnseiten über Haltemittel (Quetschhülse (Crimphülse), Konusverschraubung, Klebehülse etc.), in denen sie festgelegt sind, lösbar einzufügen sind, sowie aus einer im Gehäuse geführten Zentriereinheit, die die mit Zentrierstücken belegten oder freien Faserenden erfaßt und in geringstmöglichem Abstand zentrisch zueinander festlegt, wobei die Zentriereinheit eine doppelkonische Blattfederhülse ist welche aus einem gerollten, an den zusammenstoßenden Enden zusammengefügten, leiterartig ausgestanzten Band gebildet ist, dadurch gekennzeichnet, daß sich die Blattfederhülse (4) mit beiden Stirnflächen an den Haltemitteln (5) abstützt und daß beim axialen Zusammendrücken der Blattfederhülse (4) die einzelnen Blattfedern (10, 30, 37) auf die Außenflächen der beiden freien oder mit Zentrierstücken belegten LWL (7) gepreßt werden, so daß die beiden LWL (7) miteinander fluchten.

2. Steckverbinder nach Anspruch 1, dadurch gekennzeichnet, daß die durchgehenden "Holme" (26) des leiterartig ausgestanzten Bandes (24) nach innen umgebogen sind.

3. Steckverbinder nach Anspruch 1, dadurch gekennzeichnet, daß die Aussparungen (25) des leiterartig ausgestanzten Bandes (24) etwa ein Parallelogramm mit abgeflachten Eckpunkten oder eine Ellipse bilden.

4. Steckverbinder nach Anspuch 1, dadurch gekennzeichnet, daß die Aussparungen durch in "Holm"-Richtung verlaufende Endschlitze (36) begrenzte Trennschlitze (35) sind und daß die derart vorgestanzten Blattfedern (37) aus der Bandebene herausgeschränkt sind.

5. Steckverbinder nach einem oder mehreren der vorhergehenden Ansprüche, dadurch gekennzeichnet, daß die Blattfederhülse (4) aus federelastischem Metall ist.

6. Steckverbinder nach einem oder mehreren der vorhergehenden Ansprüche, dadurch gekennzeichnet, daß die Oberfläche der Blattfedern (10, 37) (der Blattfederhülse 4) mit einem Antikorrosionsbelag beschichtet ist.

7. Steckverbinder nach einem oder mehreren der vorhergehenden Ansprüche, dadurch gekennzeichnet, daß die Blattfederhülse (4) aus Kunststoff ist.

## Claims

1. A plug-in connector for light wave guides (LWG) comprising a plug housing into which the LWG are to be releasably inserted from opposite ends by way of holding means (crimp sleeve, taper union, adhesive sleeve etc) in which they are fixed, and a centering unit which is guided in the housing and which engages the fibre ends which are fitted with centering portions or which are free, and fixes them centrally with respect to one another at the smallest possible spacing, wherein the centering unit is a biconical leaf spring sleeve which is formed from a strip which is stamped out in a ladder-like configuration and rolled and joined together at the abutting ends, characterised in that the leaf spring sleeve (4) bears with both end faces against the holding means (5) and that when the leaf spring sleeve (4) is axially compressed the individual leaf springs (10, 30, 37) are pressed on to the outside surfaces of the two LWG (7) which are free or fitted with centering portions, so that the two LWG (7) are aligned with each other.

2. A plug-in connector according to claim 1 characterised in that the continuous 'stringers' (26) of the strip (24) which is stamped out in a ladder-like configuration are bent over inwards.

3. A plug-in connector according to claim 1 characterised in that the cut-outs (25) in the strip (24) which is stamped out in a ladder-like configuration form approximately a parallelogram with flattened corners or an ellipse.

4. A plug-in connector according to claim 1 characterised in that the cut-outs are separating slits (35) bounded by end slits (36) extending in the direction of the 'stringers' and that the leaf springs (37) which are pre-stamped in that way are offset out of the plane of the strip.

5. A plug-in connector according to one or more of the preceding claims characterised in that the leaf spring sleeve (4) is of springy metal.

6. A plug-in connector according to one or more of the preceding claims characterised in that the surface of the leaf springs (10, 37) (of the leaf spring sleeve 4) is coated with an anti-corrosive coating.

7. A plug-in connector according to one or more of the preceding claims characterised in that the leaf spring sleeve (4) is of plastics.

## Revendications

1. Connecteur à enfichage pour guides d'ondes lumineuses (LWL) formé d'un boîtier de fiche dans lequel les LWL peuvent être insérés de façon détachable, depuis des côtés frontaux opposés, par l'intermédiaire de moyens de retenue (douille à écrasement, vissage conique, douille à collage, etc.) dans lesquels ils sont fixés, ainsi que d'une unité de centrage guidée dans le boîtier,qui saisit les extrémités de fibres, garnies de pièces de centrage ou libres, et les fixe de façon centrée l'une par rapport à l'autre à une distance aussi petite que possible, l'unité de centrage étant une douille de ressort à lame doublement conique, formée par une bande découpée à la façon d'un conducteur, roulée, assemblée aux extrémités qui se rencontrent, caractérisé par le fait que la douille de ressorts à lame (4) s'appuie par les deux extrémités sur les moyens de retenue (5), et que lors de la compression axiale des douilles de ressorts à lame (4), les ressorts à lame individuels (10, 30, 37) sont pressés sur les surfaces extérieures des deux LWL (7) libres ou munis de pièces de centrage, de telle sorte que les deux LWL (7) soient en alignement.

2. Connecteur à enfichage selon la revendication 1, caractérisé par le fait que les "longerons" continus (26) de la bande (24) découpée à la façon d'un conducteur sont recourbés vers l'intérieur.

3. Connecteur à enfichage selon la revendication 1, caractérisé par le fait que les évidements (25) de la bande (24) découpée à la façon d'un conducteur forment à peu près un parallélogramme à angles aplatis ou une ellipse.

4. Connecteur à enfichage selon la revendication 1, caractérisé par le fait que les évidements sont des fentes de séparation (35) limitées par des fentes terminales (36) situées dans la direction du "longeron" et que les ressorts à lame (37) ainsi préalablement découpés sont pliés hors du plan de la bande.

5. Connecteur à enfichage selon une ou plusieurs des revendications précédentes, caractérisé par le fait que la douille de ressort à lame (4) est en métal élastique.

6. Connecteur à enfichage selon une ou plusieurs des revendications précédentes, caractérisé par le fait que la surface des ressorts à lame (10, 37) (de la douille de ressort à lame 4) est revêtue d'un revêtement anticorrosion.

7. Connecteur à enfichage selon une ou plusieurs des revendications précédentes, caractérisé par le fait que la douille de ressort à lame (4) est en matière synthétique.

Fig. 1

Fig. 2

Fig. 3

Fig. 4

Fig. 5

Fig. 6

Fig.7

Fig. 8

Fig. 9